Europäisches Patentamt

European Patent Office

Office européen des brevets

(19)

(11) Veröffentlichungsnummer: **0 345 580**
**A2**

## (12) EUROPÄISCHE PATENTANMELDUNG

(21) Anmeldenummer: 89109610.9

(22) Anmeldetag: 27.05.89

(51) Int. Cl.⁴: **C08J 9/12 , C08J 9/14 ,
C08L 75/04**

(30) Priorität: 09.06.88 DE 3819630

(43) Veröffentlichungstag der Anmeldung:
**13.12.89 Patentblatt 89/50**

(84) Benannte Vertragsstaaten:
**AT BE CH DE ES FR GB IT LI NL SE**

(71) Anmelder: **BAYER AG**

**D-5090 Leverkusen 1 Bayerwerk(DE)**

(72) Erfinder: **Wiedermann, Rolf, Dr.
Wiesenstrasse 18
D-5068 Odenthal-Voiswinkel(DE)**
Erfinder: **Hoffmann, Erwin
Martin-Buber-Strasse 47
D-5090 Leverkusen 3(DE)**
Erfinder: **Kaufung, Reinhard, Dr.
Heymannstrasse 34
D-5090 Leverkusen 1(DE)**
Erfinder: **Krippl, Kurt
Niederstrasse 104
D-4019 Monheim(DE)**
Erfinder: **Schulte, Klaus
Kurt-Schumacher-Ring 91b
D-5090 Leverkusen 1(DE)**

(54) **Verfahren zum Einbringen von Treibmitteln in mindestens eine der fliessfähigen Reaktionskomponenten für die Herstellung von Polyurethanschaumstoffen.**

(57) Zur lunker- und rißfreien Herstellung von Polyurethanschaumstoffen mit hohen Wärmedämmeigenschaften bringt man, vorzugsweise in einem Begasungsbehälter mittels eines Hohlrührers, Treibmittel, welche eine geringere Wärmeleitfähigkeit als Luft aufweisen, in gasförmigem Zustand zumindest in eine der Reaktionskomponenten, insbesondere in das Polyol, ein.

EP 0 345 580 A2

## Verfahren zum Einbringen von Treibmitteln in mindestens eine der fließfähigen Reaktionskomponenten für die Herstellung von Polyurethanschaumstoffen

Die Erfindung betrifft ein Verfahren zum Einbringen von geringere Wärmeleitfähigkeit als Luft aufweisenden Treibmitteln in mindestens eine der fließfähigen Reaktionskomponenten für die Herstellung von Polyurethanschaumstoffen mit hohen Wärmedämmeigenschaften, worunter auch Polyisocyanuratschaumstoffe zu verstehen sind.

Die Aufgabe des Treibmittels bei der Herstellung von Schaumstoffen ist bekannt und hinreichend beschrieben. Neben der Einflußnahme auf die Zellstruktur hängen auch die Wärmedämmeigenschaften von der Art und Menge des Treibmittels ab. Es werden überwiegend Trichlorfluormethan (R 11), in einigen Fällen Dichlordifluormethan (R 12) oder $CO_2$ verwendet. Die genannten Treibmittel werden in eine der Reaktionskomponenten, meist in das Polyol, in einer Menge von 1 bis 40 Gew.-Teilen auf 100 Gew.-Teile Reaktionskomponente eingemischt. Die Treibmittel sind bekanntlich sehr niedrigviskos (ca. 1 mPas) und besitzen eine Dichte von ca. 1,5 kg/dm³. Die Dosierung von bei Raumtemperatur gasförmigen Treibmitteln, wie R 12, ist besonders problematisch.

Da chlorhaltige perhalogenierte Treibmittel, wie z.B. R 12, einen schädlichen Einfluß auf die Atmosphäre haben sollen, gewinnt die Verwendung von alternativen Treibmitteln steigende Bedeutung. Solche sind oft gasförmig.

Man hat deshalb solche Treibmittel vor der Zugabe zu einer Reaktionskomponente verflüssigt (FR-PS 1 220 214). Setzt man jedoch größere Treibmittelmengen ein, führt dies zu Störungen in der Schaumstoffstruktur.

In EP-A1-89 796 und EP-A1-145 250 wird die Verwendung von gasförmigem $CO_2$ bzw. $CO_2$-Addukten beschrieben. $CO_2$ ist jedoch für die Polyurethanschaumstoff-Herstellung von geschlossenzelligen Schaumstoffen wenig geeignet, da es rasch herausdiffundiert und dadurch Schrumperscheinungen entstehen können.

Schließlich ist aus DE-A1-3 226 818 die Verwendung von Luft oder anderer inerter Gase als Treibmittel anstelle von halogenalkanhaltigen Treibmitteln bekannt. Auch hier sind durch Diffusion auftretende Schrumpfungen zu befürchten.

Es besteht die Aufgabe, ein Verfahren zu schaffen, mit welchem auch größere Mengen von geringere Wärmeleitfähigkeit als Luft aufweisenden Treibmitteln mindestens in eine der Reaktionskomponenten eingemischt werden können und trotzdem ein schrumpf-, riß- und lunkerfreier Schaumstoff erhalten wird.

Diese Aufgabe wird dadurch gelöst, daß geringere Leitfähigkeit als Luft aufweisende Treibmittel in gasförmigem Zustand in mindestens eine der fließfähigen Reaktionskomponenten eingebracht werden.

Es hat sich überraschenderweise gezeigt, daß sich selbst durch das Hinzufügen größerer Mengen solcher höhere Dichte als Luft aufweisenden Treibmittel in gasförmigem Zustand im Schaumstoff keine Lunker bilden. Besonders geeignet sind Treibgase mit guter Löslichkeit in der zu beladenden Reaktionskomponente.

Soweit die Treibmittel in flüssiger Form vorliegen, müssen die Verarbeitungsbedingungen, d.h. Druck und/oder Temperatur, so gewählt werden, daß sich die Treibmittel spätestens vor dem Einbringen in gasförmigem Zustand befinden.

Besonders gute Resultate werden erzielt, indem solche Treibmittel in gasförmigem Zustand in einem Begasungsbehälter mittels eines Hohlrührers in die Reaktionskomponente feinverteilt eindispergiert werden.

Der besondere Vorteil besteht darin, daß aufgrund des großen Oberflächenaustausches das Gas direkt und schnell von der Reaktionskomponente aufgenommen wird und in Lösung geht.

Als Reaktionskomponenten für die Polyurethanschaumstoff-Herstellung, insbesondere Polyurethanhartschaumstoff-Herstellung, kommen die üblichen Isocyanate und Polyole sowie gegebenenfalls Zusatzstoffe in Frage. Hi zu wird ganz allgemein auf "Kunststoff-Handbuch Polyurethane" Band VII, 2 Auflage (1983), Carl-Hanser-Verlag, München/Wien, hingewiesen.

Das Eindisperigieren von Gasen, insbesondere von Luft, in eine der Reaktionskomponenten in einem Begasungsbehälter mittels eines Hohlrührers ist zwar seit längerem bekannt (EP-A1-175 252, EP-A1-110 244, DE-A1-34 34 443, DE-A1-34 34 444). Dem Fachmann lag es jedoch nicht nahe, derartige Begasungseinrichtungen zum Eindispergieren von Treibmitteln der genannten Art und insbesondere in größeren Mengen zu verwenden, weil diese in der Regel erst in den gasförmigen Zustand hätten überführt werden müssen. Es war auch nicht vorauszusehen, daß bei Zugabe größerer Treibmittelmengen in gasförmiger Form die bei der Zugabe in flüssiger Form auftretenden Schwierigkeiten überwindbar sind.

Als geeignete Treibmittel werden vorzugsweise verwendet: Monochlordifluormethan, Monochlordifluorethan, Di-, Tri-, Tetra-pentafluorethan, Heptafluorpropan, Octafluorcyclobutan, Schwefelhexafluorid, insbesondere Monochlordifluormethan und Schwefelhexafluorid. Die meisten dieser Treibmittel besitzen eine gute Löslichkeit in Polyol. Die Löslichkeit von Monochlordifluormethan unter einem Druck von 2 bar beträgt beispielsweise ca. 20.000 Nml/l.

Vorzugsweise beträgt die Viskosität der Reaktionskomponenten maximal 2000 mPa.s.

Dadurch verbessert sich die Gasaufnahme.

Besonders gute Ergebnisse werden erzielt, wenn das Treibmittel zu einer mittleren Blasengröße von maximal 1,5 mm verteilt wird.

Dadurch wird eine genügend feine Dispersion erzeugt, welche die Gefahr des Zusammenfließens einzelner Gasbläschen zu größeren herabsetzt.

Bei einiger Erfahrung läßt sich die mittlere Blasengröße optisch schätzen. Man kann sie aber auch dadurch ermitteln, daß man den mit dem gasförmigen Treibmittel beladenen Komponentenstrom beispielsweise durch ein transparentes, vorzugsweise rechteckiges, Rohr führt und ihn photographiert. Erforderlichenfalls vergrößert man das Photo und stellt die Anzahl der Blasen pro Flächeneinheit fest sowie - unter Berücksichtigung des Vergrößerungsmaßstabes des Photos - die Anzahl von Blasen jeweils gleichen Durchmessers bzw. näherungsweise gleichen Durchmesserbereiches und ermittelt daraus die mittlere Blasengröße.

Vorzugsweise wird die Beladung der Reaktionskomponente mit Treibmittel nur bis an deren Sättigungspunkt durchgeführt.

Dadurch läßt sich der Grad der Treibmittelbeladung besonders exakt einstellen.

Besonders geeignete Vorrichtungen, bestehend aus Begasungsbehälter mit Hohlrührer, sind in den deutschen Patentanmeldungen P 38 080 82.6 und P 38 18 161.4 beschrieben. Soweit die Treibmittel nicht bereits in gasförmiger Form vorliegen, muß dem Begasungsbehälter ein Aggregat zum Überführen der flüssigen Treibmittel in den gasförmigen Zustand vorgeordnet werden. Erforderlichenfalls müssen die Treibmittelzuführleitung sowie der Be gasungsbehälter temperiert werden, bzw. der Arbeitsdruck muß so einstellbar sein, daß das Treibmittel vor dem Eindispergieren im gasförmigen Zustand verbleibt. Das heißt, gegebenenfalls müssen Druckregler und/oder Heizaggregate vorgesehen werden.

Beispiele

Die Herstellung der Schaumstoffe in Form von Hartschaumstoffplatten erfolgte auf einer Doppeltransportbandanlage mit Hilfe einer Hochdruckverschäumungsmaschine. Die verwendete Verschäumungsrezeptur hatte folgende Zusammensetzung:

| | | |
|---|---|---|
| Zucker-propylenoxidpolyether, OH-Zahl 430, Viskosität 3 000 mPa.s | 15 | Gew.-Teile |
| Ethylendiaminpropylenoxidpolyether OH-Zahl 630 | 11 | Gew.-Teile |
| Phthalsäureester mit Diethylenglykol, Sorbit, Propylenglykol, OH-Zahl 400, Funktionalität 2,2 | 34 | Gew.-Teile |
| Glycerin | 5 | Gew.-Teile |
| Diphenylkresylphosphat | 30 | Gew.-Teile |
| Dimethylmethanphosphonat | 5 | Gew.-Teile |
| Silikonstabilisator B 8404 der Goldschmidt AG in Essen | 1 | Gew.-Teil |
| Wasser | 2 | Gew.-Teile |
| N,N-Dimethylaminocyclohexan | 1,2 | Gew.-Teile |
| 25 %ige Kaliumacetatlösung in Diethylenglykol | 1,8 | Gew.-Teile |
| Polymeres 4,4'-Diphenylmethandiisocyanat, NCO-Gehalt 30 %, 2-Kern-Anteil 45 % | 130 | Gew.-Teile |
| Kennzahl | 110 | |
| Viskosität der Polyolmischung bei 25° C: 1300 mPa.s | | |

Die folgende Tabelle gibt die Verschäumungsbedingungen und die Ergebnisse wieder.

Dabei entsprechen die Beispiele 1, 2 und 3 dem neuen Verfahren unter Verwendung einer Begasungs-

EP 0 345 580 A2

einrichtung gemäß der deutschen Patentanmeldung P 38 08 082.6; die Beispiele 4 und 5 sind Vergleichsbeispiele, wobei das Treibmittel in flüssiger Form über eine handelsübliche Vormischkammer der Polyolkomponente zugeführt wurde. Während mit 2,8 Gew.-Teilen Treibmittel eine störungsfreie Hartschaumstoffplatte erzeugt werden konnte, entwickelten sich mit 4 Gew.-Teilen Treibmittel Gaspolster, die eine exakte Dosierung unmöglich machten.

| | 1 | 2 | 3 | 4 | 5 |
|---|---|---|---|---|---|
| Plattendicke (mm) | 40 | 40 | 40 | 40 | 40 |
| Begasungsbedingungen: | | | | | |
| Temperatur ($^\circ$C) | 20 | 20 | 20 | 20 | 20 |
| Druck (Bar) | 4 | 4 | 4 | 4 | 4 |
| Treibmittel | $CHClF_2$ | $CHClF_2$ | $SF_6$ | $CHClF_2$ | $CHClF_2$ |
| Treibmittelanteil (Gew.-Tl.) | 7,5 | 11 | 2 | 2,8 | 4 |
| Rohdichte (kg/m$^3$) | 40 | 32,8 | 48,7 | 51,3 | - |
| Abbindezeit (sec.) | 21 | 22 | 21 | 22 | - |
| Zellstruktur: | | | | | |
| mittlerer Zelldurchmesser (mm) | 0,7 | 0,7 | 0,5 | 0,7 | - |
| Wärmeleitfähigkeit (W/mk) | 0,020 | 0,020 | 0,026 | 0,024 | - |
| Druckfestigkeit (MPa) | 0,15 | 0,11 | 0,30 | 0,30 | - |

## Ansprüche

1. Verfahren zum Einbringen von geringere Wärmeleitfähigkeit als Luft aufweisenden Treibmitteln in mindestens eine der fließfähigen Reaktionskomponenten für die Herstellung von Polyurethanschaumstoffen mit hohen Wärmedämmeigenschaften, dadurch gekennzeichnet, daß solche Treibmittel in gasförmigem Zustand eingebracht werden.

2. Verfahren nach Anspruch 1, dadurch gekennzeichnet, daß solche Treibmittel in gasförmigem Zustand in einem Begasungsbehälter mittels eines Hohlrührers in die Reaktionskomponente feinverteilt eindispergiert werden.

3. Verfahren nach Anspruch 1 oder 2, dadurch gekennzeichnet, daß als Treibmittel Monochlordifluormethan, Monochlordifluorethan, Di-, Tri-, Tetra-pentafluorethan, Heptafluorpropan, Octafluorcyclobutan, Schwefelhexafluorid, insbesondere Monochlordifluormethan und Schwefelhexafluorid, verwendet werden.

4. Verfahren nach Anspruch 1, 2 oder 3, dadurch gekennzeichnet, daß die Viskosität der Reaktionskomponenten bei 25$^\circ$ C maximal 2000 mPa.s beträgt.

5. Verfahren nach einem der Ansprüche 1 bis 4, dadurch gekennzeichnet, daß das Treibmittel zu einer mittleren Blasengröße von maximal 1,5 mm verteilt wird.

6. Verfahren nach einem der Ansprüche 1 bis 5, dadurch gekennzeichnet, daß die Beladung der Reaktionskomponente mit Treibmittel nur bis an deren Sättigungspunkt durchgeführt wird.

4